# EUROPÄISCHE PATENTSCHRIFT

(11) **EP 2 018 261 B1**
(45) Veröffentlichungstag und Bekanntmachung des Hinweises auf die Patenterteilung: **01.09.2010**
(21) Anmeldenummer: 07724570.2
(22) Anmeldetag: 25.04.2007
(51) Int. Cl.: B29C 67/00

(54) **VORRICHTUNG UND VERFAHREN ZUM HERSTELLEN EINES DREIDIMENSIONALEN OBJEKTES**
APPARATUS AND METHOD FOR THE PRODUCTION OF A THREE-DIMENSIONAL OBJECT
DISPOSITIF ET PROCÉDÉ DE FABRICATION D'UN OBJET EN TROIS DIMENSIONS

(30) Priorität: 18.05.2006 DE 102006023485
(43) Veröffentlichungstag der Anmeldung: 28.01.2009
(73) Patentinhaber: EOS GmbH Electro Optical Systems, 82152 Krailling (DE)
(72) Erfinder: MATTES, Thomas, 82205 Gilching (DE)
(74) Vertreter: Hofer, Dorothea
(86) Internationale Anmeldenummer: PCT/EP2007/003640
(87) Internationale Veröffentlichungsnummer: WO 2007/134687

(56) Entgegenhaltungen:
- WO-A-01/41939
- WO-A-02/083323
- DE-C1- 19 514 740

## Beschreibung

Die vorliegende Erfindung bezieht sich auf eine Vorrichtung und auf ein Verfahren zum Herstellen eines dreidimensionalen Objektes durch schichtweise Verfestigen eines pulverförmigen Aufbaumaterials an dem Querschnitt des Objektes in der jeweiligen Schicht entsprechenden Stellen.

Aus der DE 195 14 740 C1 sind eine Vorrichtung und ein Verfahren zum Herstellen eines dreidimensionalen Objektes mittels Lasersintern bekannt, bei denen das Auftragen und Glätten einer Schicht des pulverförmigen Aufbaumaterials mit einem Beschichter in Form einer Klinge erfolgt. Die Flächen der Klinge weisen dabei jeweils einen vorgegebenen Winkel zu der Arbeitsebene auf, auf der die Schicht des Aufbaumaterials aufgetragen wird, und bilden eine der Arbeitsebene zugewandte Auftragfläche.

Der optimale Winkel für eine solche Auftragfläche ist in der Praxis von verschiedenen Parametern abhängig, unter anderem von der Schichtdicke der aufzutragenden Schicht und den Materialeigenschaften des pulverförmigen Aufbaumaterials. Im Stand der Technik wird für den Winkel der Auftragfläche des Beschichters relativ zu der Arbeitsfläche ein Winkel gewählt, der unter verschiedenen bekannten und denkbaren Bedingungen zu akzeptablen Ergebnissen führt. Aufgrund eines solchen Kompromisses gelingt es, für die verschiedensten Bedingungen einen akzeptablen Prozess zu erreichen. Zum Beispiel kann es jedoch sein, dass bei der Verwendung eines pulverförmigen Aufbaumaterials, dessen Materialeigenschaften deutlich von dem Durchschnitt der denkbaren zu verwendenden Materialien abweichen, nicht die optimalen Ergebnisse bei dem Schichtauftrag erzielt werden.

WO 01/41939 A1 offenbart eine Vorrichtung und Verfahren zum Auftragen dünner Schichten eines Pulvers gemäß der Oberbegriffen der Ansprüche 1 und 12. Eine Abstreifvorrichtung enthält einen drehbaren Schuh, der das Pulver vor sich her schiebt und über die Arbeitsebene fährt, auf der das Pulver aufgetragen werden soll. Dabei wird der Schuh in einem Winkel zu der Arbeitsebene geneigt.

Es ist Aufgabe der Erfindung, eine Vorrichtung und ein Verfahren zum Herstellen eines dreidimensionalen Objektes durch schichtweise Verfestigen von pulverförmigem Ausgangsmaterial bereitzustellen, mit denen ein verbesserter Schichtauftrag für verschiedene Prozessparameter wie z.B. unterschiedlicher Materialeigenschaften der Aufbaumaterialien ermöglicht wird.

Die Aufgabe wird durch eine Vorrichtung gemäß Anspruch 1 und durch ein Verfahren gemäß Anspruch 12 gelöst. Weiterbildungen der Erfindung sind in den Unteransprüchen gekennzeichnet.

Die erfindungsgemäße Lösung weist den Vorteil auf, dass die Geometrie des Beschichters in einfacher Weise an die Prozessparameter des durchzuführenden Herstellungsprozesses angepasst werden kann.

Durch die Anpassung der Geometrie des Beschichters an die jeweiligen Prozessparameter kann über einen großen Bereich an Materialeigenschaften und Schichtdicken jeweils ein optimaler Schichtauftrag verwirklicht werden und somit eine Verbesserung der hergestellten Objekte in der Oberflächenbeschaffenheit und der Maßhaltigkeit erzielt werden. Das Herstellen von dreidimensionalen Objekten mit unterschiedlichen Prozessparametern in kurzer zeitlicher Folge wird ermöglicht.

Weitere Merkmale und Zweckmäßigkeiten der Erfindung ergeben sich aus der Beschreibung von Ausführungsbeispielen anhand der beigefügten Zeichnungen. Von den Figuren zeigen:
- Fig. 1: eine schematische Querschnittansicht der Vorrichtung und
- Fig. 2: eine schematische Seitenansicht eines Be- schichters gemäß einer Ausführungsform.

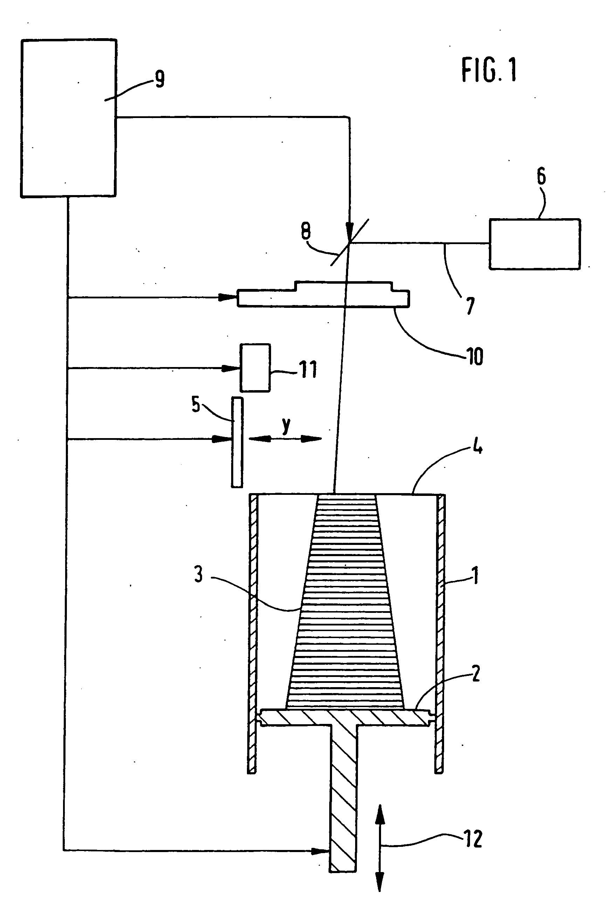

Im Folgenden wird zunächst mit Bezug auf Fig. 1 die Gesamtvorrichtung in einer ersten Ausführungsform beschrieben.

Wie in Fig. 1 ersichtlich ist, weist die Vorrichtung zum Herstellen eines dreidimensionalen Objektes einen Baubehälter 1 auf, in dem ein Träger 2 mit einer im wesentlichen ebenen zu der Oberkante des Baubehälters im wesentlichen parallel ausgerichteten Oberseite vorgesehen ist. Der Träger 2 ist zum Tragen eines zu bildenden Objektes 3 in umgebendem unverfestigtem Aufbaumaterial ausgebildet. In Fig. 1 ist das zu bildende Objekt 3 dargestellt, das aus einer Mehrzahl von Schichten pulverförmigen Aufbaumaterials besteht, das durch Einwirkung von elektromagnetischer Strahlung an den dem Objekt entsprechenden Stellen verfestigt wurde, wie später näher beschrieben wird.

Der Träger 2 ist über eine Höheneinstellvorrichtung 12, die in Fig. 1 schematisch über einen Doppelpfeil dargestellt ist, in vertikaler Richtung in dem Baubehälter 1 verfahrbar. Die Ebene in der aufgetragenes Pulvermaterial verfestigt wird definiert eine Arbeitsebene 4, in der ein Schichtauftrag von Aufbaumaterial und ein anschließendes Verfestigen des pulverförmigen Aufbaumaterials zum Bilden des dreidimensionalen Objektes durchgeführt werden.

Oberhalb des Baubehälters 1 ist eine Vorrichtung zum Verfestigen des pulverförmigen Materials in der Arbeitsebene 4 vorgesehen. Die Vorrichtung weist eine Strahlungsquelle auf, z.B. in Form eines Lasers 6, der einen Laserstrahl 7 erzeugt. Oberhalb des Baubehälters 1 sind ferner eine Ablenkvorrichtung 8, z.B. in Form eines Umlenkspiegels, der über eine nicht dargestellte Schwenkeinheit geschwenkt werden kann, und eine Fokussiereinheit 10 angeordnet. Es ist eine Steuerung 9 vorgesehen, die die Ablenkvorrichtung 8 und die Fokussiereinheit 10 derart ansteuern kann, dass der Laserstrahl 7 auf jede beliebige Stelle der Arbeitsebene 4 gelenkt werden kann.

Ferner ist oberhalb des Baubehälters 1 eine Zufuhrvorrichtung 11 vorgesehen, mit der pulverförmiges Aufbaumaterial für eine folgende Schicht zugeführt werden kann. Diese Zufuhrvorrichtung 11 ist z.B. in Form eines mit pulverförmigem Aufbaumaterial gefüllten Troges ausgebildet, der mit einer Dosiereinrichtung versehen sein kann, mit der eine vorbestimmte Menge des Aufbaumaterials ausgestoßen wird.

Wie in Fig. 1 nur schematisch dargestellt ist, ist oberhalb des Baubehälters eine Auftragevorrichtung in Form eines Beschichters 5 vorgesehen. Die Unterkante des Beschichters 5 liegt in der Arbeitsebene 4 und es ist eine schematisch durch einen horizontalen Doppelpfeil dargestellte Verschiebevorrichtung zum Verschieben des Beschichters 5 in einer Richtung Y parallel zu der Arbeitsebene 4 vorgesehen. Die Verschiebevorrichtung ermöglicht eine Bewegung des Beschichters 5 mit einer einstellbaren variablen Geschwindigkeit über die gesamte Oberfläche der Arbeitsebene 4 in der Richtung von links nach rechts in Fig. 1 und wieder zurück. Der Beschichter 5 erstreckt sich in der Richtung senkrecht zu der Darstellungsebene von Fig. 1 im Wesentlichen über die gesamte Breite des Baubehälters 1.

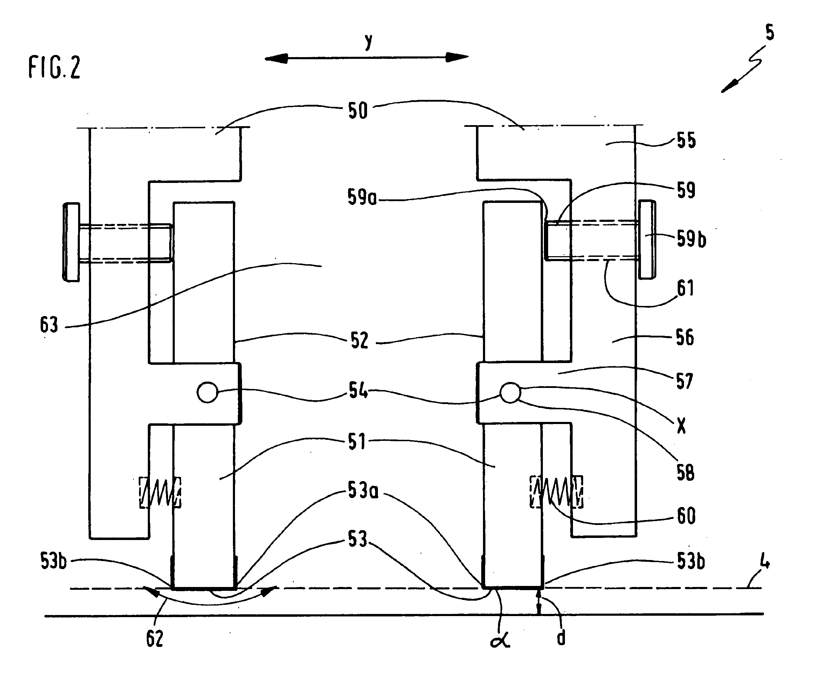

Die Ausbildung des Beschichters wird im Folgenden anhand der Fig. 2 näher beschrieben.

Wie in Fig. 2 zu sehen ist, weist der Beschichter 5 bei der dargestellten Ausführungsform zwei Halterungsabschnitte 50 und zwei Auftrageabschnitte 51 auf, wobei diese bezüglich einer Vertikalen auf der Arbeitsebene 4 symmetrisch ausgebildet sind. Zur Vereinfachung der Beschreibung werden daher zunächst nur ein Halterungsabschnitt 50 und ein Auftrageabschnitt 51 beschrieben. Eine Bewegungsrichtung Y des Beschichters 5 verläuft in Fig. 2 horizontal von links nach rechts bzw. wieder zurück parallel zu der Arbeitsebene 4.

Der Auftrageabschnitt 51 besteht jeweils aus einer sich im Wesentlichen vertikal zu der Arbeitsebene 4 erstreckenden dünnen Platte bzw. Klinge 52, die sich in der Richtung senkrecht zu der Darstellungsebene über die gesamte Breite der Arbeitsebene 4 erstreckt. Die untere Stirnseite der Platte 52 bildet eine Auftragfläche 53, die in einem Winkel α relativ zu der Arbeitsebene 4 angeordnet ist (in Fig. 2: 0°, d.h. parallele Ausrichtung). Die Auftragfläche weist eine dem anderen Auftrageabschnitt 51 zugewandte Unterkante 53a und eine von dem anderen Auftrageabschnitt 51 abgewandte Unterkante 53b auf. An der dem anderen Auftrageabschnitt 51 zugewandten Seite weist der Auftrageabschnitt 51 an seinem unteren Ende ein Fläche 51a auf.

Etwa in seiner Mitte in der vertikalen Richtung ist der Auftrageabschnitt 51 auf beiden Seiten senkrecht zu der Darstellungsebene von Fig. 2 jeweils mit einem Lagerungszapfen 54 versehen, der seitlich von der Platte 52 hervorsteht. Die beiden Lagerungszapfen 54 auf gegenüberliegenden Seiten der Platte 52 definieren eine Schwenkachse X, die parallel zu der Arbeitsebene 4 verläuft.

Der Halterungsabschnitt 50 besteht bei der dargestellten Ausführungsform aus einem oberen massiven Rahmen 55 an den sich ein sich vertikal erstreckender Tragabschnitt 56 anschließt. Der Tragabschnitt 56 erstreckt sich in der Richtung der Schwenkachse X seitlich zumindest etwas weiter als die Platte 52 des Auftrageabschnitts 51. Etwa in der Mitte des Trägers 56 in der vertikalen Richtung ist auf beiden Seiten der Platte 52 jeweils ein horizontal in Richtung des anderen Halterungsabschnitts 50 verlaufender Lagerungsvorsprung 57 ausgebildet. Der Lagerungsvorsprung 57 ist jeweils mit einer Ausnehmung 58 versehen, in der ein Lagerungszapfen 54 des Auftrageabschnitts 51 aufgenommen ist. Zusammengefasst ist der Auftrageabschnitt 51 mit seinen beiden seitlichen Lagerungszapfen 57 in den Ausnehmungen 58 des Halterungsabschnitts 50 gelagert, sodass er gegenüber dem Halterungsabschnitt 50 eine Schwenkbewegung um die Schwenkachse X ausführen kann. Die Schwenkbewegung erfolgt dabei derart, dass die Unterkanten 53a und 53b der Auftragfläche 53 immer parallel zu der Arbeitsebene 4 verlaufen und der Winkel α zwischen der Auftragfläche 53 und der Arbeitsebene 4 bei der Schwenkbewegung variiert wird. Die Schwenkbewegung ist für den linken Auftrageabschnitt 51 in Fig. 2 schematisch durch einen Doppelpfeil 62 dargestellt.

Zum Einstellen des Winkels α ist ferner eine Einstellvorrichtung vorgesehen, die in der dargestellten Ausführungsform durch einen Stellmechanismus, z.B. eine Stellschraube 59, und einen Rückstellmechanismus, z.B. eine Rückstellfeder 60, gebildet ist. Die Stellschraube 59 ist in eine durchgehende Gewindebohrung 61 eingeschraubt, die in dem Träger 56 oberhalb des Lagerungsvorsprungs 57 vorgesehen ist. Die Frontfläche 59a der Stellschraube 59 ist abgeflacht ausgebildet und ragt derart aus dem Träger 56 hervor, dass sie oberhalb der Lagerungszapfen 57 gegen die Platte 52 des Auftrageabschnitts 51 drückt. Die Rückstellfeder 60 ist unterhalb der Schwenkachse X zwischen dem Auftrageabschnitt 51 und dem Träger 56 vorgesehen und drückt die Platte 52 durch Schwenkung um die Schwenkachse X gegen die Frontfläche 59a der Stellschraube 59. Durch Einschrauben bzw. Ausschrauben der Stellschraube 59 wird der Auftrageabschnitt 51 gegen die Kraft der Rückstellfeder 60 um die Schwenkachse X geschwenkt, sodass der Winkel α zwischen der Auftragfläche 53 und der Arbeitsebene 4 verkleinert bzw. vergrößert wird. Bei der dargestellten Ausführungsform ist der Kopf 59b der Stellschraube 59 als Rad dargestellt, mit dem die Stellschraube zum Einschrauben bzw. Ausschrauben erfasst werden kann. Es kann z.B. eine Skalierung vorgesehen sein, mit der an der Stellung des Kopfes 59b der Stellschraube 59 der Winkel α abgelesen werden kann.

Der Beschichter 5 ist aus einem starren Material, insbesondere Metall oder einem Kunststoffmaterial, gefertigt und die Auftragfläche 53 ist wie oben beschrieben in Form einer Klinge ausgebildet.

In der Regel werden die Winkel α der beiden Auftragflächen 53 des linken und des rechten Auftragabschnitts 51 auf denselben Wert eingestellt sein, die Winkel können jedoch auch unabhängig voneinander auf verschiedene Winkel eingestellt werden. Falls keine getrennte Einstellung der Winkel erwünscht ist, kann die Einstellvorrichtung auch derart ausgebildet werden, dass die Winkel beider Auftragflächen 53 synchron verändert werden.

Die Arbeitsweise des Beschichters 5 wird im Folgenden anhand der Fig. 1 und 2 beschrieben.

Der Beschichter 5 befindet sich zunächst in einer Position auf einer Seite der Arbeitsebene 4, z.B. die linke Seite der Arbeitsebene 4, wie in Fig. 1 schematisch dargestellt ist. Mit der Zufuhrvorrichtung 11 wird eine definierte Menge des pulverförmigen Aufbaumaterials in den Bereich 63 zwischen den Auftrageabschnitten 51 des Beschichters 5 eingebracht, sodass sich zwischen den Auftrageabschnitten 51 eine Säule des Aufbaumaterials ausbildet. Die horizontale Oberfläche des Trägers 2 bzw. einer zuvor verfestigten Pulverschicht wird mit Hilfe der Höheneinstellvorrichtung 12 um einen definierten Abstand d unter die Arbeitsebene 4 bewegt. Anschließend wird der Beschichter 5 mit einer definierten Geschwindigkeit in der Bewegungsrichtung Y parallel über die Arbeitsfläche 4 bewegt. Die Bewegung erfolgt z.B. zunächst von links nach rechts in den Fig. 1 und 2. Durch die Bewegung des Beschichters 5 wird das pulverförmige Aufbaumaterial unter die Auftragfläche 53 auf der linken Seite des Beschichters 5 in Fig. 2 bewegt und diese glättet das Aufbaumaterial, sodass eine definierte Schicht des pulverförmigen Aufbaumaterials mit einer Dicke auf der Arbeitsebene aufgetragen wird, die dem Abstand d entspricht.

Die Anordnung der Auftragfläche 53 in dem Winkel α bewirkt, dass das Aufbaumaterial bei dem Auftragen der Schicht gleichzeitig verdichtet und geglättet wird.

Durch die symmetrische Ausbildung des Beschichters 5 mit den beiden Auftrageabschnitten 51 ist ermöglicht, dass ein Schichtauftrag sowohl bei einer Bewegung des Beschichters von links nach rechts in Fig. 2 als auch bei einer umgekehrten Bewegung von rechts nach links in Fig. 2 erfolgen kann. Zwischen den beiden Auftragabschnitten 51 ist dabei eine Pulversäule des aufzutragenden Pulvers ausgebildet, was einen besonders gleichmäßigen und wohldefinierten Schichtauftrag in den beiden entgegengesetzten Bewegungsrichtungen des Beschichters ermöglicht. Diese Ausbildung ermöglicht effizient einen gleichzeitigen Transport des aufzutragenden Pulvermaterials und dessen Auftragung.

Das Verfahren zum Herstellen des dreidimensionalen Objektes wird im Folgenden beschrieben.

Im Betrieb wird zunächst basierend auf u.a. den Materialeigenschaften des Aufbaumaterials und der zu erzeugenden Schichtdicke ein optimaler Winkel zwischen Auftragfläche 53 und Arbeitsebene 4 bestimmt und dieser mit der Einstellvorrichtung, d.h. der Stellschraube 59 bei der gezeigten Ausführungsform eingestellt.

Anschließend werden abwechselnd mit dem Beschichter 5 Schichten des Aufbaumaterials auf die Oberseite des Trägers 2 bzw. auf zuvor verfestigte Schichten aufgebracht und mittels der Steuerung 9 der gebündelte Laserstrahl 7 über die Ablenkeinrichtung 8 und die Fokussiereinheit 10 derart auf die aufgebrachte Schicht gelenkt, dass das Aufbaumaterial an den dem Querschnitt des Objekts entsprechenden Stellen der Schicht gesintert bzw. verfestigt wird. Diese Verfahrensschritte werden solange wiederholt, bis das zu fertigende Objekt fertiggestellt ist.

Mit der Vorrichtung und dem Verfahren kann der Winkel der Auftragfläche 53 relativ zu der Arbeitsebene 4 exakt abhängig von den jeweiligen Prozessparametern eingestellt werden. Somit kann auch für unübliche Materialeigenschaften und Schichtdicken ein optimaler Schichtauftrag erfolgen und die Bauteilqualität der erzeugten dreidimensionalen Objekte kann verbessert werden.

Obwohl in der Ausführungsform eine spezielle Ausgestaltung beschrieben wurde, sind zahlreiche Abwandlungen möglich. Die Vorrichtung zum Verfestigen muss nicht notwendigerweise ein Laser sein, sondern auch andere Quellen für elektromagnetische Strahlung bzw. für Teilchenstrahlung mit der für die Verfestigung des Aufbaumaterials erforderlichen Energie sind denkbar. In der beschriebenen Ausführungsform ist der Beschichter derart beschrieben, dass jeweils eine untere Auftragfläche 53 vorgesehen ist. Der Beschichter kann jedoch auch so ausgebildet sein, z.B. in Form einer nach unten spitz zulaufenden Klinge, dass die seitliche Fläche 51a eine Auftragfläche bildet.

Der Beschichter kann auch als Klinge ausgebildet sein, die auf ihren gegenüberliegenden Seiten je eine Auftragfläche zum Auftragen des Pulvermaterials in unterschiedlichen Bewegungsrichtungen aufweist.

In der dargestellten Ausführungsform ist ein symmetrisch aufgebauter Beschichter 5 beschrieben, der zwei Auftragflächen 53 aufweist, sodass in zwei Bewegungsrichtungen aufgetragen werden kann. Es ist jedoch auch möglich, die Erfindung auf einen Beschichter anzuwenden, der nur in einer Bewegungsrichtung einen Schichtauftrag bewirkt.

Ferner wurde eine Einstellvorrichtung beschrieben, bei der Einstellung der Winkelstellung der Auftragfläche 53 manuell über eine Schraube erfolgt. Es ist jedoch auch eine automatische Einstellung der Winkelstellung der Auftragfläche möglich, die z.B. über einen mit der Steuerung 9 verbundenen Schrittmotor oder einen andersgearteten Motor, Aktor bzw. Antrieb erfolgen kann.

Zum Ermöglichen der Winkeleinstellung wurde eine Schwenkvorrichtung beschrieben, bei der die Einstellung über eine Schraube und eine Rückstellfeder erfolgt. Es sind jedoch auch andere technische Realisierungen möglich; eine Arretierung der Verbindung des Halterungsabschnitts und des Auftrageabschnitts kann auch reibschlüssig oder formschlüssig erfolgen. Auch muss die Einstellung der Winkelstellung nicht über eine Lagerung mit Zapfen und Ausnehmungen erfolgen, sondern es sind auch andere gelenkige Verbindungen möglich, bei denen die Winkelstellung mit einer ausreichenden Kraft gesichert werden kann.

Das Variieren der Winkelstellung muss nicht über eine Schraube erfolgen, es können z.B. auch Exzenter oder andere Einstellmechanismen verwendet werden.

Als pulverförmiges Aufbaumaterial können verschiedene Materialien wie z.B. Kunststoff, Metall, Keramik, Sand, beschichte Pulver, mehrkomponentige Pulver und Kombinationen davon verwendet werden.

## Patentansprüche

1. Vorrichtung zum Herstellen eines dreidimensionalen Objektes durch schichtweise Verfestigen von pulverförmigem Aufbaumaterial an dem Querschnitt des herzustellenden Objektes in der jeweiligen Schicht entsprechenden Stellen mit
einer Arbeitsebene (4), in der sukzessiv zu verfestigende Schichten des pulverförmigen Aufbaumaterials aufgetragen und partiell verfestigt werden,
einem Beschichter (5) zum Auftragen einer Schicht des Aufbaumaterials in der Arbeitsebene, wobei der Beschichter eine Klinge mit einer der Arbeitsebene (4) zugewandte Auftragfläche (53, 51a) aufweist,
wobei eine Einstellvorrichtung (59, 60, 54) vorgesehen ist, die derart ausgebildet ist, dass ein Winkel (α) zwischen der Auftragfläche (53, 51a) und der Arbeitsebene (4) einstellbar ist.
**dadurch gekennzeichnet, dass**
eine Rückstellvorrichtung (60) vorgesehen ist, die die Auftragfläche (53, 51a) mit einer Rückstellkraft in eine eingestellte Winkelstellung bewegt.

2. Vorrichtung nach Anspruch 1, bei der die Auftragfläche (53, 51a) derart ausgebildet ist, dass sie die Schicht beim Auftragen glättet und/oder verdichtet.

3. Vorrichtung nach einem der Ansprüche 1 oder 2, bei der der Beschichter (5) einen Halterungsabschnitt (50) und einen mit der Auftragfläche (53, 51a) versehenen Auftragabschnitt (51), der durch die Klinge gebildet wird, aufweist, die schwenkbar miteinander verbunden sind.

4. Vorrichtung nach Anspruch 3, bei der das Maß der Schwenkung zwischen dem Halterungsabschnitt (50) und dem Auftragabschnitt (51) durch die Einstellvorrichtung (59, 60, 54) bestimmt wird.

5. Vorrichtung nach einem der Ansprüche 1 bis 4, bei der die Einstellvorrichtung (59, 60, 54) einen Drehabschnitt (59b) aufweist und eine Drehung des Drehabschnitts um ein bestimmtes Maß den Winkel (α) zwischen der Auftragfläche (53, 51a) und der Arbeitsebene (4) um ein im festen Verhältnis dazu stehendes Maß ändert.

6. Vorrichtung nach einem der Ansprüche 1 bis 5, bei der die Winkelstellung des Winkels (α) arretierbar ist.

7. Vorrichtung nach einem der Ansprüche 1 bis 6, bei der der Beschichter (5) zwei voneinander beabstandete Auftragflächen (53, 53, 51a, 51a) zum Auftragen bei Bewegung des Beschichters in zwei zueinander entgegengesetzten Richtungen aufweist.

8. Vorrichtung nach einem der Ansprüche 1 bis 7, bei der zwischen den beiden Auftragflächen (53, 53, 51a, 51a) ein Bereich (63) zur Aufnahme zugeführten aufzutragenden Aufbaumaterials vorgesehen ist.

9. Vorrichtung nach einem der Ansprüche 1 bis 6, wobei die Klinge zwei Auftragflächen zum Auftragen in voneinander verschiedenen Bewegungsrichtungen des Beschichters aufweist oder bei der der Beschichter zwei Klingen aufweist, wobei an jeder Klinge eine Auftragsfläche vorgesehen ist.

10. Vorrichtung nach einem der Ansprüche 1 bis 9, wobei die Einstellvorrichtung (59, 60, 54) eine Skala aufweist, die den eingestellten Winkel zwischen der Auftragfläche (53, 51a) und der Arbeitsebene (4) anzeigt.

11. Vorrichtung nach einem der Ansprüche 1 bis 10, bei der die Einstellvorrichtung einen Antrieb zum Einstellen des Winkels (α) aufweist.

12. Verfahren zum Herstellen eines dreidimensionalen Objektes durch schichtweise Verfestigen eines pulverförmigen Aufbaumaterials an dem Querschnitt des herzustellenden Objekts in der jeweiligen Schicht entsprechenden Stellen mit den Schritten:
Bestimmen eines erforderlichen Winkels (α) zwischen einer Auftragfläche (53, 51a) einer Klinge eines Beschichters (5) zum Auftragen des Aufbaumaterials und einer Arbeitsebene (4),
Einstellen des bestimmten Winkels (α) und
anschließendes Herstellen eines dreidimensionalen Objektes durch abwechselndes schichtweise Auftragen und Verfestigen des Aufbaumaterials
**dadurch gekennzeichnet, dass**
die Auftragfläche (53, 51a) durch eine Rückstellvorrichtung (60) mit einer Rückstellkraft in eine eingestellte Winkelstellung bewegt wird.

13. Verfahren nach Anspruch 12, bei dem das Einstellen des erforderlichen Winkels (α) jeweils für zwei voneinander beabstandete Auftragflächen erfolgt.

14. Verfahren nach einem der Ansprüche 12 oder 13, bei dem die Schichten des Aufbaumaterials abwechselnd in zwei entgegengesetzten Richtungen aufgetragen werden.

15. Verfahren nach einem der Ansprüche 12 bis 14, bei dem das Einstellen des Winkels (α) automatisch gesteuert erfolgt.

## Claims

1. Device for manufacturing a three-dimensional object by a layerwise solidification of a building material in powder form at the positions in the respective layer that correspond to the cross-section of the object to be manufactured, having
a work plane (4), in which layers of the building material in powder form are successively applied and partially solidified,
an application device (5) for applying a layer of the building material in the work plane, wherein the application device has a blade having an application surface (53, 51a) facing the work plane (4),
wherein an adjustment device (59, 60, 54) is provided that is formed such that an angle (α) between the application surface (53, 51a) and the work plane (4) is adjustable,
**characterized in that**
a reset device (60) is provided that moves the application surface (53, 51a) by a reset force into a preset angular position.

2. Device according to claim 1, in which the application surface (53, 51a) is formed such that it smoothes and/or compacts the layer during the application.

3. Device according to claim 1 or 2, in which the application device (5) comprises a mounting portion (50) and an application portion (51) provided with the application surface (53, 51a) and formed by the blade, which are swivel-connected to each other.

4. Device according to claim 3, in which the extent of the swivelling of the mounting portion (50) and the application portion (51) with respect to each other is determined by the adjustment device (59, 60, 54).

5. Device according to one of claims 1 to 4, wherein the adjustment device (59, 60, 54) has a rotary portion (59b) and a rotation of the rotary portion by a certain amount changes the angle (α) between the application surface (53, 51a) and the work plane (4) at an amount, wherein the two amounts are in a fixed ratio.

6. Device according to one of claims 1 to 5, wherein the angular position of the angle (α) is lockable.

7. Device according to one of claims 1 to 6, in which the application device (5) has two application surfaces (53, 53, 51a, 51a) spaced from each other for an application in two directions that are opposite to one another, when the application device is moved.

8. Device according to one of claims 1 to 7, wherein between the two application surfaces (53, 53, 51a, 51a) a region (63) is provided for receiving the supplied building material which is to be applied.

9. Device according to one of claims 1 to 6, wherein the blade has two application surfaces for applying in directions of movement of the application device that are different from one another or wherein the application device has two blades and an application surface is provided at each blade.

10. Device according to one of claims 1 to 9, wherein the adjustment device (59, 60, 54) has a scale that indicates the preset angle between the application surface (53, 51a) and the work plane (4).

11. Device according to one of claims 1 to 10, in which the adjustment device has a drive for adjusting the angle (α).

12. Method for manufacturing a three-dimensional object by a layerwise solidification of a building material in powder form at the positions in the respective layer that correspond to the cross-section of the object to be manufactured having the steps:
determining a necessary angle (α) between an application surface (53, 51a) of a blade of an application device (5) for applying the building material and a work plane (4),
setting the determined angle (α) and
subsequently manufacturing a three-dimensional object by alternatingly applying the building material layerwise and solidifying it,
**characterized in that**
the application surface (53, 51a) is moved by a reset device (60) having a reset force into a preset angular position.

13. Method according to claim 12, in which the setting of the necessary angle (α) is done for two application surfaces that are spaced from one another, respectively.

14. Method according to one of claims 12 or 13, in which layers of the building material are applied alternatingly in two opposite directions.

15. Method according to one of claims 12 to 14, wherein the setting of the angle (α) is effected by an automatic control.

## Revendications

1. Appareil pour la fabrication d'un objet tridimensionnel par solidification en couches d'un matériau structurant pulvérulent à des emplacements correspondant à la section de l'objet à fabriquer dans les différentes couches, comprenant
un plan de travail (4), sur lequel des couches du matériau structurant pulvérulent à solidifier successivement sont appliquées et partiellement solidifiées,
un élément de revêtement (5) pour l'application d'une couche du matériau structurant sur le plan de travail, ledit élément de revêtement comportant une lame avec une surface d'application (53, 51a) opposée au plan de travail (4),
un dispositif de réglage (59, 60, 54) étant prévu, lequel est réalisé de telle manière qu'un angle (α) peut être réglé entre la surface d'application (53, 51a) et le plan de travail (4),
**caractérisé**
**en ce qu'**il est prévu un dispositif de rappel (60), lequel déplace la surface d'application (53, 51 a) vers une position angulaire réglée au moyen d'une force de rappel.

2. Appareil selon la revendication 1, où la surface d'application (53, 51a) est réalisée de manière à lisser et/ou compacter la couche lors de l'application.

3. Appareil selon l'une des revendications 1 ou 2, où l'élément de revêtement (5) comporte une partie de support (50) et une partie d'application (51) pourvue de la surface d'application (53, 51 a) et formée par la lame, lesquelles sont raccordées de manière pivotante l'une à l'autre.

4. Appareil selon la revendication 3, où la valeur du pivotement entre la partie de support (50) et la partie d'application (51) est définie par le dispositif de réglage (59, 60, 54).

5. Appareil selon l'une des revendications 1 à 4, où le dispositif de réglage (59, 60, 54) comporte une partie rotative (59b) et où une rotation de valeur définie de la partie rotative modifie l'angle (α) entre la surface d'application (53, 51a) et le plan de travail (4) d'une valeur en relation fixe avec celle-ci.

6. Appareil selon l'une des revendications 1 à 5, où la position angulaire de l'angle (α) peut être fixée.

7. Appareil selon l'une des revendications 1 à 6, où der l'élément de revêtement (5) comporte deux surfaces d'application (53, 53, 51 a, 51 a) espacées l'une de l'autre pour l'application dans deux directions opposées l'une à l'autre lors du déplacement de l'élément de revêtement.

8. Appareil selon l'une des revendications 1 à 7, où une zone (63) est prévue entre les deux surfaces d'application (53, 53, 51a, 51a) pour la réception du matériau structurant alimenté à appliquer.

9. Appareil selon l'une des revendications 1 à 6, où la lame comporte deux surfaces d'application pour l'application dans des directions de déplacement différant l'une de l'autre de l'élément de revêtement ou dans lequel l'élément de revêtement comporte deux lames, dans lequel une surface d'application est prévue sur chaque lame.

10. Appareil selon l'une des revendications 1 à 9, où le dispositif de réglage (59, 60, 54) comporte une graduation indiquant l'angle réglé entre la surface d'application (53, 51a) et le plan de travail (4).

11. Appareil selon l'une des revendications 1 à 10, où le dispositif de réglage comporte un entraînement pour le réglage de l'angle (α).

12. Procédé de fabrication d'un objet tridimensionnel par solidification en couches d'un matériau structurant pulvérulent à des emplacements correspondant à la section de l'objet à fabriquer dans les différentes couches, comprenant les étapes suivantes :
détermination d'un angle (α) exigé entre une surface d'application (53, 51 a) d'une lame d'un élément de revêtement (5) pour l'application du matériau structurant, et un plan de travail (4),
réglage de l'angle (α) déterminé et
fabrication consécutive d'un objet tridimensionnel par application en couches alternées et solidification du matériau structurant,
**caractérisé**
**en ce que** la surface d'application (53, 51 a) est déplacée par un dispositif de rappel (60) au moyen d'une force de rappel vers une position angulaire réglée.

13. Procédé selon la revendication 12, où le réglage de l'angle (α) exigé est effectué pour chacune de deux surfaces d'application espacées l'une de l'autre.

14. Procédé selon l'une des revendications 12 ou 13, où les couches du matériau structurant sont appliquées dans deux directions opposées en alternance.

15. Procédé selon l'une des revendications 12 à 14, où le réglage de l'angle (α) est automatiquement commandé.
